# EUROPÄISCHE PATENTSCHRIFT

(11) **EP 0 428 897 B1**
(45) Veröffentlichungstag und Bekanntmachung des Hinweises auf die Patenterteilung: **24.04.1996**
(21) Anmeldenummer: 90120399.2
(22) Anmeldetag: 24.10.1990
(51) Int. Cl.: B29C 51/00, B65B 9/04, B65B 3/00

(54) **Verfahren zur Herstellung einer Fliessmittelpackung, Vorrichtung zur Herstellung einer solchen Packung und Verwendung eines besonderen Kunststoffes**
Process for producing a fluid material package, device for producing such a package and usage of a particular plastic
Procédé de production d'un emballage pour produit fluide, dispositif de production d'un tel emballage et utilisation d'une matière plastique particulière

(30) Priorität: 24.11.1989 DE 3938874
(43) Veröffentlichungstag der Anmeldung: 29.05.1991
(73) Patentinhaber: Tetra Laval Holdings & Finance SA, CH-1009 Pully (CH)
(72) Erfinder: Reil, Wilhelm, D- 6140 Bensheim (DE); Deutschbein, Ulrich, W- 6109 Mühltal (DE); Knobloch, Gerd, W- 6103 Griesheim (DE); Liebram, Udo, W- 6102 Pfungstadt (DE)
(74) Vertreter: Weber, Dieter, Dr.

(56) Entgegenhaltungen:
- DE-U- 8 615 147
- GB-A- 2 211 191
- US-A- 4 704 844

## Beschreibung

Die Erfindung betrifft ein Verfahren zur Herstellung einer mit fließfähigem Gut gefüllten Packung aus Kunststoff, bei welchem eine Bahn aus verformbarem Kunststoff von einer Rolle abgezogen und unter Bildung von wenigstens einer Reihe von wannenförmigen Behältern verformt wird, der jeweilige Behälter danach gefüllt, verschlossen, vereinzelt und abgefördert wird, wobei jeweils wenigstens ein Paar von Behältern derart geformt wird, daß an den in Förderrichtung außen liegenden Außenkanten jeweils eines Paares der nach oben offenen Behälter und zwischen jeweils zwei in Förderrichtung aufeinanderfolgenden Paaren von Behältern quer zur Förderrichtung jeweils ein flanschartig nach außen Überstehender Rand geformt wird, wobei eine einen Teilhohlraum der Ausgießeinrichtung bildende Mulde eingeformt wird, und der flanschartige Rand im wesentlichen in einer Ebene und um die Öffnungen der Behälter herumliegend angeordnet ist, wobei von einer zweiten Rolle eine Kunststoffolie abgezogen und auf den Rand längs der jeweiligen Außenkante, die mindestens eine Reihe von aneinanderhängenden Paaren von Behältern nach außen abdichtend, in Förderrichtung längs aufgesiegelt wird, die Kunststoffolie auf die Ränder zwischen in Förderrichtung aufeinanderfolgenden Paaren von Behältern durch Querversiegeln mit dem Rand verbunden wird und die Bahn geschnitten und bearbeitet wird.

Weiterhin betrifft die Erfindung eine Vorrichtung zur Herstellung einer solchen Packung aus Kunststoff, wobei die Vorrichtung mit einer Zuführrolle für eine Bahn aus verformbarem Kunststoff, einer Einrichtung zum Verformen der Bahn in wenigstens eine Reihe von wannenförmigen Behältern, mit Umlenk- und Antriebsrollen für die wenigstens eine Reihe von wannenförmigen Behältern, mit Fülleinrichtungen, Zuführeinrichtungen für eine weitere Kunststoffolie und Verschließeinrichtungen und mit einem Abförderer versehen ist Auch betrifft die Erfindung die Verwendung von tiefziehfähigem Kunststoff als Material für die Bahn von Behältern.

Flüssigkeitsbehälter gibt es in großer Zahl auf dem Markt, wobei Milch und Säfte überwiegend in Flüssigkeitspackungen transportiert werden, deren Seitenwände aus mit Kunststoff beschichtetem Papier bestehen. Hier unterscheidet man zwischen Packungen, deren Boden ebenfalls aus diesem Material besteht, wobei der Deckel aus Kunststoff ohne Trägermaterial bestehen kann, und solchen Packungen, bei denen sowohl Boden als auch Deckel aus Kunststoff allein bestehen können. Fettartige Produkte, insbesondere Öle, werden bereits in Packungen aus Kunststoff ohne Trägermaterial verpackt, wobei die verschiedensten Kunststoff-Formverfahren zur Herstellung derartiger, ganz aus Kunststoff bestehender Packungen verwendet werden.

Aus Kostengründen hat man bisher davon abgesehen, Verpackungen für flüssige Lebensmittel, wie z.B. Milch und Säfte, in ganz aus Kunststoff bestehenden Behältern zu vertreiben. Nicht nur der Kunststoff als solcher ist im Vergleich zu Papier teuer, sondern auch die für die Herstellung und das Abfüllen von Packungen benutzten Maschinen sind bei reinen Kunststoffpackungen bisher unwirtschaftlich teuer.

Aus der US-A-4,704,844 ist ein Verfahren der eingangs genannten Art bekannt. Dort werden aber zwei getrennte Bahnen erwärmt und so verformt, daß jede Bahn eine Reihe von hintereinanderliegenden Paaren von einseitig offenen Behältern aufweist. Die beiden Bahnen werden derart zueinandergeführt, daß die einseitig offenen Behälter, mit den Hohlräumen einander zugewandt, spiegelbildlich Flansch auf Flansch aufeinandergelegt und zur Bildung einer Reihe von allseitig geschlossenen Behältern geformt werden. Mit Nachteil muß jede Bahn außen unter Anpassung der Außenkontur der V-förmigen Behälter beschnitten werden, wodurch nicht nur erheblich Abfall entsteht, der wieder aufgearbeitet werden sollte, sondern die Schneidvorgänge sind auch teuer und aufwendig. Die allseitig geschlossenen, ein Doppelvolumen umgebenden Packungen müssen vor dem Befüllen aufgeschnitten werden, wobei zweckmäßigerweise der Schnitt durch die eingeformte Mulde derart gelegt wird, daß beide Behälter des Paares eine röhrenförmige Öffnung nach außen hin haben, durch welche jeder Behälter gefüllt wird. Infolge des Befüllens durch die jeweilige Öffnung mit recht kleinem Durchmesser wird der Füllvorgang kompliziert und zeitaufwendig. Außerdem muß das Füllvolumen dosiert werden, weil anderenfalls die Flüssigkeit aus dem Füllröhrchen überlaufen würde. Danach erfolgt ein nochmaliges Quersiegeln zum Verschließen des Füllröhrchens, bevor die jeweilige Verpackung weitergefördert werden kann.

Der Erfindung liegt nun die Aufgabe zugrunde, ein Herstellungsverfahren für eine aus Kunststoff bestehende Fließmittelpackung und eine Vorrichtung hierfür so zu schaffen, daß eine Massenproduktion mit einer großen Maschinenleistung möglich ist und gleichwohl die Verfahrensschritte so ausgestaltet sind, daß Fließmittelpackungen in großer Stückzahl mit möglichst wenigen und einfachen Bearbeitungs- und Herstellungsschritten erstellt werden können, wobei durch die Verwendung geeigneter Materialien und ihrer Ausgestaltung ein preisgünstiges Produkt erzeugt werden kann.

Hinsichtlich des Verfahrens wird diese Aufgabe erfindungsgemäß dadurch gelöst, daß
- beide Behälter in Förderrichtung nebeneinanderliegen
- die Mulde im Bereich der in Förderrichtung außen liegenden Außenkante jedes Behälters des jeweiligen Paares eingeformt wird,
- der Rand und die Mulde so eingeformt werden, daß der Rand die Mulde außen umzieht,
- die Behälter vor dem Querversiegeln dadurch gefüllt werden, daß der mindestens eine sich hierbei ergebende Schlauch mit dem zu verpackenden Gut gefüllt wird, und
- die Behälter jeweils eines Paares Folie auf Folie zusammengebracht und zur Bildung einer Packung miteinander verschweißt werden.

Beim Studium dieser erfindungsgemäßen Lösung für die vorgenannte Aufgabe ist zu beachten, daß aus jeweils einem Behälterpaar eine Packung gebildet wird. Zu jeweils einer erfindungsgemäß hergestellten Packung gehören also zwei Behälter. Beispielsweise können beide Behälter etwa gleich groß sein, so daß man die Packung in zwei Hälften geteilt denken kann, wobei jede Packungshälfte durch einen Behälter gebildet wird.

Mit dem erfindungsgemäßen Verfahren kann man pasteuse Packungen, vorzugsweise und ohne Schwierigkeiten aber auch leicht flüssige Fließmittel verpacken, z.B. auch Milch und Säfte.

Die Erfindung schlägt vor, wannenförmige Behälter in Förderrichtung nebeneinander anzuordnen, eine glatte, ungeformte Folie aufzusiegeln, den sich hierbei ergebenden Schlauch mit Füllgut zu füllen und zu verschließen und dann im Bereich der verschließenden Folie jeweils zwei Behälter umgekehrt so aufeinanderzubringen, daß sie Folie auf Folie liegen, und dann fest zu verbinden. Gleichzeitig wird eine für Flüssigkeiten zweckmäßige Ausgießeinrichtung dadurch vorgesehen, daß in einem bestimmten Kantenbereich ein Teil des flanschartigen Randes zu einer Mulde geformt wird, deren Inneres mit dem Behälterinneren in Verbindung steht. Gemäß der Erfindung umzieht aber der Rand, längs weichem die Kunststoffolie später abdichtend aufgesiegelt wird, die Mulde, so daß die Siegelnaht außerhalb der Mulde verläuft Hierbei überwindet die Erfindung ferner Bedenken, daß jeder Behälter des Paares für sich flüssigkeitsdicht verschlossen, nämlich versiegelt sei, und ein Öffnen nur schwerlich durchgeführt werden könnte. Tatsächlich aber liegen die Mulden so in dem flanschartigen Rand, daß beim Zusammenbringen der beiden Behälter eines Paares Folie auf Folie auch Mulde auf Mulde zu liegen kommt. Jede Mulde bildet einen Teilhohlraum der Ausgießeinrichtung, so daß nach dem Zusammenbringen der beiden Behälter eines Paares auch die beiden Mulden den Hohlraum der Ausgießeinrichtung bilden.

In überraschender Weise wird durch das Verbinden zweier verschlossener Behälter in der erfindungsgemäß gelehrten Weise tatsächlich eine Kunststoffpackung geschaffen, mit der auch Flüssigkeiten transportiert und für den Endverbraucher zweckmäßig gehandhabt werden können.

Damit das Ausgießen für den Endverbraucher leicht und praktisch wird, ist bei weiterer Ausgestaltung des erfindungsgemäßen Verfahrens vorgesehen, daß die Mulden beim Zusammenbringen der Behälter jedes Paares aufeinanderzuliegen kommen und sich zum Gesamthohlraum der Ausgießeinrichtung ergänzen und daß sowohl der die Mulde außen umziehende Rand als auch eine Teilfläche der Mulde unter Bildung der Ausgießöffnung entfernt werden. Stellt man sich die Gestalt einer Mulde halbzylinderförmig vor, wobei die eine Stirnfläche des Zylinders geschlossen ist und neben dem flanschartigen Rand liegt, dann muß die andere Stirnfläche mit dem Inneren des Behälters verbunden sein. Bringt man nun die Behälter jedes Paares zusammen, dann ergänzen sich im Beispiel der halbzylinderförmigen Mulde die beiden Mulden in den flanschartigen Rändern der beiden Behälter zu einer Ausgießeinrichtung in Zylindermantelform, d.h. der Endverbraucher erkennt einen Ausgießstutzen in Gestalt eines kurzen Rohres. Das weiterhin vorteilhafte Entfernen auch einer Teilfläche der Mulde beim Herstellungsverfahren dient dem Öffnen des Behälters im Bereich der Ausgießeinrichtung, nachdem diese selbstverständlich die richtige Position erhalten hat, im allgemeinen in eine obere Position gebracht worden ist. Zur besseren und anschaulichen Vorstellung kann man sich jeden quaderförmigen Behälter stehend vorstellen mit dem unten angeordneten Boden und der oben angeordneten Ausgießeinrichtung. Zweckmäßigerweise wird die oberste Teilfläche der Ausgießeinrichtung entsprechend dieser erfindungsgemäßen Lehre entfernt. Der Endverbraucher findet dann eine gefüllte und nur am oberen Ende des Ausgießstutzens offene Verpackung vor. Es versteht sich, daß man diese in an sich bekannter Weise mit einer Kappe und entsprechenden Abdichtwulsten flüssigkeitsdicht verschließen und sogar wiederverschließbar öffnen kann. Gerade auf diese Weise kann eine Packung mit fließfähigem Gut preiswert und schnell hergestellt, gefüllt und verschlossen werden, wobei durch das Zusammenbringen der beiden Behälter Folie auf Folie eine Gesamtpackung gebildet wird mit einer Gesamt-Ausgießeinrichtung, die noch während des Herstellungsverfahrens in zweckmäßiger Weise ganz oben geöffnet wird.

Etwaige Bedenken von Fachleuten für die Herstellung von Flüssigkeitspackungen, daß die Kunststoffolie beim Ausgießen stören könnte, sind abwegig, wie die Erfindung in der Praxis bereits gezeigt hat. Es ist auch einsichtig, daß beispielsweise nach dem Abschrauben einer abdichtenden Kappe von der Ausgießeinrichtung ein fließfähiges Füllgut aus jedem Teil der Packung ausgegossen werden kann, wobei das Füllgut längs der Kunststoffolie im Bereich der Ausgießeinrichtung herausströmt. Eine Behinderung des ausströmenden Füllgutes durch die Kunststoffolie, welche bei hälftig geteilter Packung die Ausgießeinrichtung mittig durchzieht, is nicht zu befürchten und wurde nicht beobachtet.

Zweckmäßig ist es gemäß der Erfindung ferner, wenn die Behälter jedes Paares durch Umklappen um eine gemeinsame, in Förderrichtung verlaufende innere Kante scharnierartig zusammengebracht und miteinander verbunden werden. Zwar könnte man jeden Behälter für sich rundum mit einem flanschartig nach außen überstehenden Rand versehen und die beiden Behälter dann Folie auf Folie zusammenbringen. Sowohl die Verfahrensschritte als auch die Vorrichtung zur Durchführung eines solchen Verfahrens vereinfacht sich aber erheblich, wenn es im Bereich eines Paares von Behältern eine gemeinsame innere Kante zwischen den beiden Behältern eines Paares gibt, welche die beiden scharnierartig miteinander verbindet. Dies bedeutet nicht, daß das Material einer Dauerbeanspruchung hinsichtlich einer Biegebewegung unterworfen sein muß. Vielmehr handelt es sich um eine einzige Dreh- oder Wendebewegung, wobei der eine Behälter um die gemeinsame innere Kante scharnierartig um vorzugsweise 180° so herumgeklappt wird, daß Folie auf Folie zu liegen kommen und sich die Mulden der beiden auf diese Weise zusammengebrachten Behälter zu der Gesamt-Ausgießeinrichtung ergänzen. Diese gemeinsame innere Kante hat en Vorteil, daß die Positionierung des umgeklappten Behälters oder beider der Umklappbewegung unterzogenen Behälter relativ zueinander justiert ist, ohne daß aufwendige Steuereinrichtungen der Maschine im Bereich der Wendestation erforderlich sind.

Dieses Umwenden oder Umklappen erfolgt bei dem Verfahren erfindungsgemäß besonders vorteilhaft dann, wenn nach dem dichtenden Aufsiegeln der Kunststoffolie rundum auf die Ränder des jeweiligen Paares von Behältern jeweils zwei in Förderrichtung aufeinanderfolgende Behälter durch einen von der Außenkante bis zur gemeinsamen inneren Kante verlaufenden Vorschnitt voneinander getrennt werden. Das Wort Vorschnitt bedeutet, daß die schneidende Bearbeitung in mehreren Stufen erfolgt, wobei ein Vorschneiden und wenigstens ein Nachschneiden vorgesehen sind. Tatsächlich ist es praktisch, wenn von jeweils einem Behälterpaar der eine Behälter in seiner Position verbleibt, während der andere Behälter, welcher mit dem ersten über die gemeinsame innere Kante scharnierartig verbunden ist, gedreht oder um diese Kante herumgeklappt wird, weil dies nicht nur am einfachsten und schnellsten gelingt sondern weil auch die Maschine bei einer solchen Bearbeitung am meisten vereinfacht werden kann.

Stellt man sich vor, daß man in Förderrichtung der Bahn blickt, dann sieht man mindestens zwei Reihen von Behältern in Förderrichtung laufen, denn die Behälter werden paarweise in Förderrichtung bewegt. Greift man nun von einer Reihe von in Förderrichtung hintereinanderlaufenden Behältern zwei beliebige heraus, dann werden diese dadurch voneinander getrennt, daß man den vorstehend beschriebenen Vorschnitt durchführt. Dabei versteht es sich natürlich, daß jeder Behälter eines Paares an seiner in Förderrichtung vorderen un auch hinteren Kante (die quer zur Förderrichtung verläuft) durchgeschnitten sein muß, damit dieser einzelne Behälter längs der gemeinsamen Innenkante scharnierartig umgeklappt werden kann. Dieses erfindungsgemäß vorgeschlagene Verfahren schließt selbstverständlich nicht aus, daß die Behälter in Gruppen zu zwei, drei, vier oder mehr Stück um die jeweils gemeinsame innere Kante auf den anderen Behälter des jeweiligen Paares umgeklappt werden. Mit anderen Worten kann man sowohl einen einzelnen Behälter umklappen, indem man ihn durch zwei der beschriebenen Vorschnitte von der übrigen Bahn trennt, man kann aber auch zwei in Förderrichtung hintereinanderverlaufende Behälter in Gestalt einer Gruppe durch entsprechende Vorschnitte von der Bahn und gegebenenfalls auch gegenseitig abtrennen und umklappen; man kann diese Gruppen aber auch zu einer größeren Anzahl von Packungen zusammenfassen. Die später noch beschriebenen Vorrichtung zeigt, daß es zweckmäßig ist, vier Behälter zusammenzufassen und diese Gruppe als Gesamtheit um die Innenkante umzuklappen.

Es wird im übrigen darauf hingewiesen, daß es keineswegs notwendig ist, daß jeder Behälter für sich gegenüber dem anderen in einem Behälterpaar einwandfrei flüssigkeitsdicht verschlossen sein muß. Dies ist nämlich dann nicht möglich, wenn die gemeinsame innere Kante eines Behälterpaares verhältnismäßig schmal, wenn nicht sogar scharf ist. Tatsächlich erfolgt die Längsversiegelung bei dem vorstehend beschriebenen schlaufartigen Teil, d.h. um das Füllrohr herum und außerhalb des Flüssigkeitspegels längs der in Förderrichtung verlaufenden Außenränder. Die Querversiegelung ihrerseits erfolgt dann längs der flanschartigen Ränder, die zwischen aufeinanderfolgenden Paaren angeordnet sind, sich also quer zur Förderrichtung erstrecken. Weder die Längs- noch die Quersiegelung erfolgt längs der inneren, gemeinsamen Kante zwischen zwei Behältern eines Paares. Dies bedeutet, daß im Falle von dünnflüssigem Füllgut dieses beim Wenden des einen Behälters gegenüber dem anderen in einem Paar sich - den Schwerkraftsgesetzen folgend - beliebig in der gesamten Packung verteilt. Dies ist weder nachteilig noch stört es Herstellung oder Gebrauch der erfindungsgemäßen Packung.

Soweit das Herstellungsverfahren erfindungsgemäß beschrieben ist, hängt jeder Packung vor dem letzten Abfördern noch mit der benachbarten unter Bildung eines Förderstranges zusammen. Dies ist erwünscht, denn einen Förderstrang kann man in einer Herstellungsmaschine besser handhaben als einzelne Packungen. Dies wirkt sich insbesondere dann günstig aus, wenn weitere Bearbeitungen an den Packungen positionsgenau durchgeführt werden müssen. Man kann dann Eingriffe genauer positionieren, d.h. Werkzeug und Werkstück exakt justiert zueinanderbringen. Deshalb ist von einem "Vorschnitt" gesprochen, bei welchem erst eine Hälfte des Behälterpaares abgetrennt und entweder einzeln oder in Gruppen separiert ist. Dieses Separieren ist auch nur im Bereich dieser umzuklappenden oder umgeklappten Reihe von in Förderrichtung hintereinanderliegenden Behältern zu verstehen, denn mit den noch zusammenhängenden Strang der anderen Reihe von Behältern der jeweiligen Behälterpaare bleiben sie über die gemeinsame innere Kante verbunden. Dies erbringt ja gerade den Vorteil des einfacheren Positionierens, damit exakt eine Teilausgießeinrichtung des einen Behälters auf die andere Teilausgießeinrichtung des anderen Behälters zu liegen kommt.

Manche Bearbeitungsvorgänge lassen sich besser beschreiben, wenn zusätzlich eine Unterscheidung zwischen dem flanschartigen Rand des jeweiligen Behälters einerseits und dem Steg der Kunststofffolie beachtet wird, welcher auf dem Rand des Behälters und nur im Bereich des Randes liegt. Der Steg gehört zwar zur Kunststoffolie, wenn aber vom Kunststoffsteg, gesprochen wird, dann versteht der Leser sofort, daß es sich nur um die streifenförmigen Ränder der Kunststoffolie handelt, die stegartig auf dem jeweiligen Behälterrand liegen und durch Verschweißen mit diesem Verbunden sind.

Erfindungsgemäß ist ferner vorgesehen, daß bei der Bildung der Packung die Behälter längs der aufeinandergelegten Ränder mit dort aufgesiegeltem Kunststoffsteg miteinander verschweißt werden. Dabei ist vorausgesetzt, daß zunächst der Kunststoffsteg auf den Rand des jeweiligen Behälters aufgesiegelt bzw. aufgeschweißt ist; und nachfolgend nach dem Zusammenbringen der beiden Behälter eines Paares sollen die Ränder der Behälter miteinander verschweißt werden, wobei selbstverständlich die Kunststoffstege dazwischenliegend mitverschweißt werden. Genauer gesagt wird im Bereich des Behälterrandes zunächst Kunststoffsteg mit Kunststoffsteg verschweißt und bei entsprechend großer Wärmezufuhr dann auch der Rand des einen Behälters mit dem des anderen verschweißt, damit die beiden Behälter unter Bildung der Gesamtpackung auch tatsächlich wie ein Stück wirken, d.h. eine integrale Packung bilden.

Dabei ist es erfindungsgemäß besonders vorteilhaft, wenn die aufeinandergelegten Ränder beider Behälter mit durchgehenden Löchern, Laschen oder Haken zusätzlich formschlüssig miteinander verbunden werden. Zur Bildung der integralen Packung hat es sich nämlich als zweckmäßig erwiesen, wenn nicht nur die Schweißkraft längs der Ränder die beiden Behälter zusammenhält sondern daß die beiden Behälter besonders dann wie ein integraler Bestandteil und damit als Gesamtpackung wirken und sich darstellen, wenn zusätzlich eine formschlüssige Verbindung zwischen den beiden Rändern der beiden Behälter eines Behälterpaares bilden. einfache Werkzeuge können beispielsweise nach dem Aufeinanderlegen der Behälter im Randbereich durch beide Ränder mitsamt den Kunststoffstegen so hindurchfahren, daß das Material des Randes des einen Behälters durch eine Öffnung hakenartig über den Rand des anderen Behälters zu liegen kommt und übergreift, wobei durch gleichzeitige Wärmeeinwirkung eine Fixierung dieser Haken oder Löcher gewährleistet wird. Damit sind die beiden Behälter längs der jeweils drei Ränder fest miteinander verankert, und der vierte Rand ist die gemeinsame innere Kante, längs welcher z.B. der Boden des Behälters ebenfalls eine Verankerung vorgibt. Der Endverbraucher empfindet die aus den beiden Behältern zusammengesetzte Verpackung tatsächlich als einstückig und integrales Produkt.

Es ist erfindungsgemäß ferner günstig, wenn die Packungen während oder nach dem Verbinden der Behälterränder miteinander vereinzelt werden. Es wurde vorstehend schon der Vorteil erwähnt, Werkzeuge bezüglich des Werkstückes besser dann zu positionieren, wenn die Werkstücke noch strangartig zusammenhängen. Wenn die Vereinzelung der Packungen voneinander erst nach dem Verbinden ihrer Ränder miteinander erfolgt, dann kann wenigstens bis zu diesem Schritt des Verbindens der Behälterränder der Strang gut positionierbar durch die Maschine geführt werden. Es hat sich besonders als vorteilhaft gezeigt, daß die Vereinzelung erst nach dem Miteinanderverbinden der Behälterränder erfolgen soll, nämlich bis zu einem solchen Verarbeitungszustand, bei welchem alle Behandlungen im wesentlichen erfolgt sind. Danach ist eine genaue Positionierung von Werkzeug zu Werkstück nicht mehr gefordert.

Bei weiterer vorteilhafter Ausgestaltung der Erfindung werden beim Entfernen des Randes des jeweiligen Behälters im Bereich der Mulde sowie deren Teilfläche zur Bildung der Ausgießöffnung die aufeinanderliegenden Kanten der Mulden zu Bildung des Ausgießhohlraumes aneinandergesiegelt, und etwa gleichzeitig werden die Ränder der Behälter zur Bildung der Packung miteinander verschweißt. Diese Maßnahmen gelten einer besonders guten Ausgestaltung der Ausgießeinrichtung. Gleichzeitig mit dem Verbinden der Behälterränder miteinander ist eine Ausgestaltung der Ausgießeinrichtung vorgesehen, nämlich das Aneinandersiegeln der Kanten der Mulden. Dieser Vorgang kann gleichzeitig mit dem Wegstanzen des Randes (plus Kunststoffsteg) im Bereich der jeweiligen Mulde erfolgen; und kann sogar durch Bewegungsschweißen erreicht werden, wenn nämlich durch ein sich schnell rotierendes Werkzeug der oberste Muldenteil entfernt wird, weil mit einem solchen Werkzeug auch das Versiegeln der Muldenkanten bewirkt wird. Der Teil der Mulden, der bei diesem Arbeitsvorgang entfernt wird, ist in zweckmäßiger Weise die bei der fertigen Packung oben liegende Scheibe bzw. die beiden Teilscheiben, welche später die Ausgießöffnung der Packung bilden. Vorzugsweise werden diese Scheiben zur Bildung der Ausgießöffnung weggestanzt. Dieser Stanzvorgang erfolgt gleichzeitig mit dem Wegstanzen des die Mulde außen umziehenden Randes bis an die Wurzel der Mulde, d.h. bis an das innere Ende des Ausgießstutzens, wo letzterer an die Packungsoberwand angesetzt ist.

Zweckmäßig kann man an der jeweiligen Unterseite die Mulde, wenn man auf die Behälter von oben auf die Öffnung blickt, mit einem Teilgewinde derart versehen, daß nach dem Zusammensetzen der Mulden und nach der Bildung der Ausgießeinrichtung auf dem Ausgießstutzen außen ein Gewinde eingeformt ist, um eine Verschließ- und Abdichtkappe aufzuschrauben.

Hinsichtlich der Vorrichtung wird die Aufgabe erfindungsgemäß dadurch gelöst, daß zwischen einer Antriebs- und einer Umlenkrolle an einem eine vertikale Komponente aufweisenden ersten Transporttrum für die wenigstens eine Reihe von Behältern ein parallel zu diesem Trum verlaufendes Füllrohr, eine das Füllrohr umgebende Längssiegeleinrichtung und in Transportrichtung hinter dem Füllrohr eine Quersiegeleinrichtung angebracht sind.

Fließfähiges Füllgut kann mit Hilfe eines Rohres verfüllt werden. Bei der Herstellung von Packungen aus Papier ist es bekannt, durch Längsversiegeln einen Papierschlauch zu bilden, in diesen ein Füllrohr einzuführen und durch Querversiegeln einzelne Packungseinheiten zu schaffen. Unter Anlehnung an diese allgemeine Idee, hier aber unter Überwindung von Schwierigkeiten durch die Anwendung auf völlig anders geartete Teilbehandlungen einer zu bildenden Packung wird hier nun zwar auch ein Füllrohr verwendet, es wird aber hierzu bei der Herstellungsvorrichtung erst einmal ein erstes Transporttrum geschaffen, welches wenigstens eine vertikale Komponente aufweist, bei dem es also mit anderen Worten ein "Oben" und ein "Unten" gibt, damit das fließfähige Füllgut durch das Rohr nach unten fließen kann. Das Füllrohr kann also senkrecht in der Vertikalen, wohl aber auch schräg dazu liegen, und es hat sich als besonders vorteilhaft erwiesen, dieses erste Transporttrum und das parallel zu diesem angeordnete Füllrohr unter einem Winkel von etwa 45° zur Vertikalen anzuordnen. Die Längssiegeleinrichtung umgibt das Füllrohr erfindungsgemäß, damit der obere Pegel des fließfähigen Füllgutes im Bereich dieses ersten Transporttrums in jedem Falle nach außen hin flüssigkeitsdicht verschlossen ist. Auf diese Weise kann ein Schlauch gebildet werden, wobei die eine "Wandung" des Schlauches die Bahn mit der Reihe von wannenförmigen Behältern ist und die andere Wandung die aufzulegende Kunststoffolie in Bahnform ist. Sind diese beiden Teile miteinander verschweißt, dann kann man von einem Schlauch sprechen, und dieser Schlauch wird mit Füllgut mit Hilfe des Füllrohres gefüllt. Abstromig vom Füllrohr ist die Quersiegeleinrichtung angebracht, so daß nach Durchlaufen des gesamten Stranges in Förderrichtung hinter der Quersiegeleinrichtung jedes Behälterpaar und damit jede Packung bereits gefüllt und flüssigkeitsdicht verschlossen ist.

Zweckmäßig ist es dabei weiterhin, wenn erfindungsgemäß über einem zweiten Transporttrum in Transportrichtung hinter der Quersiegeleinrichtung eine Vorschneidestation mit Wendevorrichtung, eine Randschweißeinrichtung und eine Vereinzelungsstation angeordnet sind. Während das erste Transporttrum in schräger Lage angeordnet sein kann, kann man das zweite Transporttrum in die horizontale Ebene verlegen, weil die Herstellungsmaschine auf diese Weise einfacher aufgebaut werden kann, insbesondere mit den Vorschneide-, Wende- und anderen Schweißeinrichtungen.

Zum Verformen der Bahn ist es dabei zweckmäßig, wenn erfindungsgemäß eine Tiefzieheinrichtung verwendet wird.

Zum Herstellen der Fließmittelpackung kann man bei weiterer vorteilhafter Ausgestaltung der Erfindung als Material für die Bahn aus verformbarem Kunststoff tiefziehfähigen Kunststoff verwenden, vorzugsweise einen Thermoplast, und hier besonders Polypropen. Dabei ist es weiterhin zweckmäßig, wenn das Material für die Bahn aus verformbarem Kunststoff ein etwa zu 60 % gefüllter Kunststoff ist, wobei als Füllstoff vorzugsweise Kreide, Glimmer, Talkum oder Gips verwendbar sind. Es hat sich auch als sehr zweckmäßig erwiesen, wenn das Material für den Behälter eine Dicke von 0,7 bis 1,2 mm, vorzugsweise 0,8 bis 1,0 mm hat, und wenn die Dicke der Kunststoffolie etwa 5 % bis 15 %, vorzugsweise etwa 10 %, der Dicke des Behälters beträgt.

Durch das oben beschriebene Verfahren und die Vorrichtung gemäß der Erfindung kann eine Fließmittelpackung mit einfachen Verfahrensmitteln und Vorrichtungsteilen geschaffen werden, zumal gerade bei der Herstellung von Fließmittelpackungen Hochleistungsmaschinen von Interesse sind. Mit anderen Worten wird ein Verfahren geschaffen, bei welchem der Behälter schnell gefüllt und schnell versiegelt werden kann. Wollte man ohne die Verwendung der dünnen Kunststoffolie die Behälter selbst, d.h. die Ränder der Behälter miteinander verschweißen, dann müßte eine hohe Wärmeleistung aufgebracht werden, um den einen flanschartigen Rand aus dem dicken Kunststoff mit dem anderen aus demselben Material zu verschweißen. Dagegen wird erfindungsgemäß überraschend eine Zwischenstufe gewählt, bei welcher nämlich nur eine sehr dünne Folie aus Kunststoff auf einen dicken Rand aufgesiegelt werden muß, wobei der Fachmann sogleich sieht, welche zeitlichen und verfahrenstechnischen Vorteile sich dadurch ergeben, daß man eine dünne Folie auf einen dicken Rand aufschweißt im Vergleich zum Verschweißen zweier dicker Ränder miteinander.

Denkbar wäre bei einer anderen Ausführungsform, die beiden Behälter nach dem Zusammenklappen zur Bildung der integralen Packung allein durch mechanische Verformung miteinander zu verbinden, ohne - außer im Öffnungsbereich - besondere Schweißarbeiten vorzusehen. Zweckmäßig ist es aber, wenn zusätzlich zu den mechanischen Verformungen zum Verbinden der Behälterränder miteinander auch Wärme wenigstens zu einem solchen Grade eingesetzt wird, daß die Maschinenleistung nicht verringert wird. Es würde also beispielsweise genügen, die beiden Kunststoffstege nach dem Wenden der Behälter bzw. der Packungsteile durch Aufbringen mäßiger Wärme und hohen Druck miteinander zu verkleben und im übrigen die formschlüssige Verbindung der Kunststoffränder mechanisch zu erreichen. Für diese Verbindungs-und Verschweißarbeiten könnte gerade so viel Zeit aufgewendet werden, wie notwendig ist, um im Bereich der Ausgießeinrichtung Stanz- und Schweißarbeiten vorzusehen. Diese Maßnahmen hätten den Vorteil, daß die Leistung der Maschine hochgehalten werden kann und dennoch die Packung aus zwei Teilen in der oben beschriebenen Weise zusammengefügt werden kann.

Besonders zweckmäßig ist es bei einer weiteren Ausgestaltung der Erfindung, wenn die beiden benachbarten Wandungen unter der gemeinsamen inneren Kante eines Behälterpaares ganzflächig oder wenigstens auf Teilen der Flächen V-förmig so auseinanderlaufen, daß die Spitze des V im Bereich der inneren Kante angeordnet wird und auf der gegenüberliegenden Seite die beiden Wandfelder auseinandergehen. Diese beiden Wandfelder kann man so ausgestalten bzw. die Ausgießeinrichtung so anordnen, daß die beiden in Rede stehenden Teilwandfelder später den Boden der fertigen Packung bilden. Nachdem Zusammenbringen der beiden Behälter durch relatives Drehen der beiden um die innere Kante herum kommen die beiden benachbarten Wandfelder im wesentlichen in eine Ebene zu liegen, d.h. es wird der Boden gebildet. Dieser Boden kann auch kerbartige Vertiefungen haben, wodurch der gleiche Vorteil wie bei dem V-förmigen Auseinandergehen der Bodenwandteile erreicht wird: nämlich das kräftige Ausgestalten des Tiefziehwerkzeuges im Bereich der inneren Kante eines Behälterpaares. Dadurch wird die Vorrichtung robust.

Die Kunststoffolie bietet für die fertige Packung einen weiteren großen Vorteil, weil sie nämlich wie die Speichen eines Fahrrades die gesamte Verpackung versteift. Da jeder Behälter die Zugkräfte der Kunststoffolie in vorteilhafter Weise für sich erhält, ist die fertige Packung, die ja aus zwei solchen Behältern besteht, besonders versteift mit der Folge, daß man zur Herstellung der wannenförmigen Behälter die Kunststoffwandung dünner ausgestalten kann. Dadurch wiederum wird das Herstellungsverfahren einfacher.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:
- Figur 1: die schematische Seitenansicht der Packungsherstellungsvorrichtung von der Vorratsrolle der Bahn aus verformbarem Kunststoff bis zum Abförderer mit den fertigen Packungen,
- Figur 2: schematisch die Draufsicht auf die Vorrichtung der Figur 1,
- Figur 2a: schematisch eine Querschnittsansicht der Figur 3 entlang der Linie IIa-IIa der Figur 3,
- Figur 3: eine Draufsicht auf den Endteil der Herstellungsvorrichtung einer gegenüber der Vorrichtung der Figur 2 veränderten Herstellungsmaschine mit zwei Herstellungslinien und damit verdoppelter Leistung,
- Figuren 4 bis 7: perspecktivische Zwischenstationen bei dem Herstellungsverfahren der Packung,
- Figur 8: perspecktivisch die fertige Packung vor der Behandlung der Ausgießeinrichtung,
- Figur 9: schematisch eine Schnittansicht, bei welcher man senkrecht auf die Mulde mit dem sie umziehenden flanschartigen Rand blickt,
- Figur 10: eine Schnittansicht quer zu der der Figur 9, wobei jedoch in Figur 10 die beiden aufgeschweißten Kunststoffolien dargestellt sind,
- Figur 11: ein Rotationsschweißwerkzeug nach seiner Einwirkung auf die fertige Ausgießeinrichtung,
- Figur 12: eine Draufsicht auf die Packung im Bereich der Ausgießeinrichtung entlang der Linie XII-XII in Figur 11 und
- Figur 13: die Querschnittsdarstellung einer Verschließkappe.

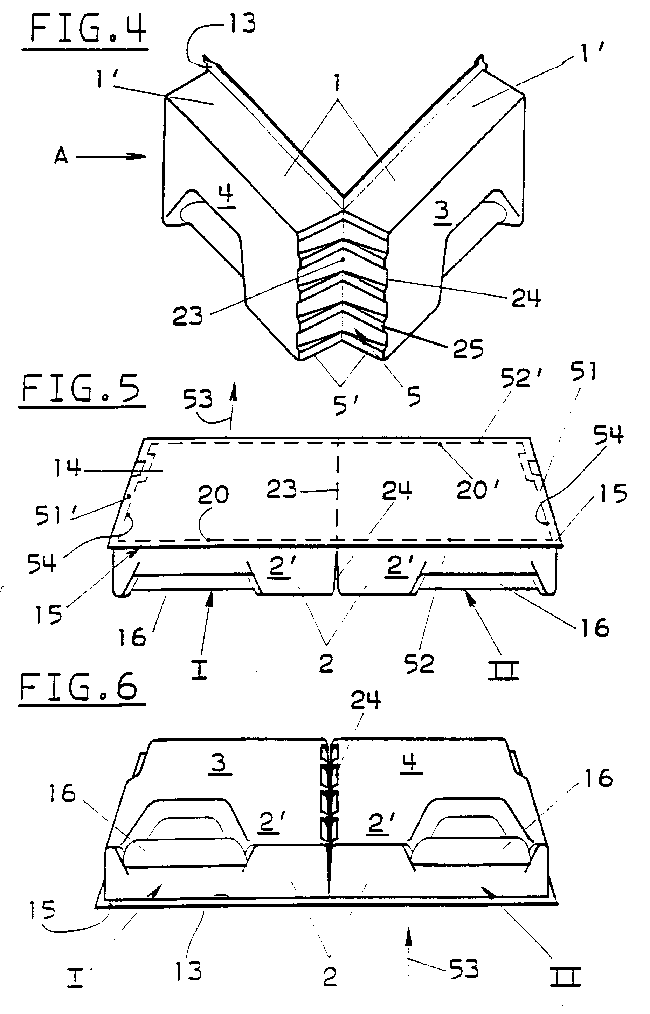

Um das Herstellungsverfahren und die Vorrichtung zur Anwendung dieses Verfahrens besser zu verstehen, ist es zweckmäßig, zunächst das Produkt, d.h. die Behälter und ihr Zusammenbringen zur Verpackung, anhand der Figuren 4 bis 8 zu beschreiben.

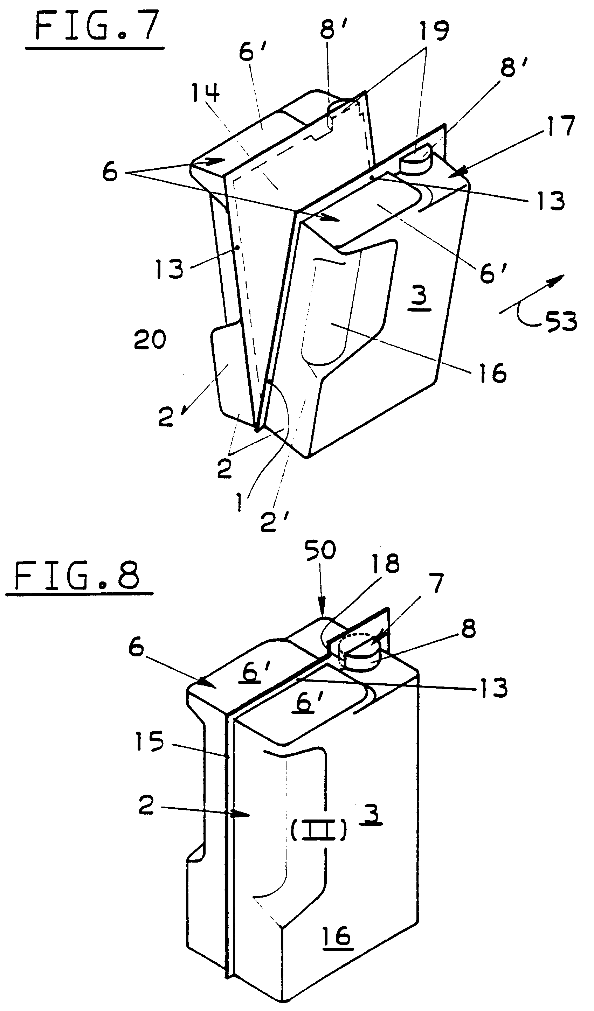

Die in Figur 8 (bis auf die Ausgießeinrichtung 7) im wesentlichen fertig dargestellte Packung 50 weist die unterhalb und neben dieser Ausgießeinrichtung 7 angeordnete vordere schmale Seitenwand 1, die sich aus den beiden vorderen halben Seitenwandteilen 1′ zusammensetzt; die hintere schmale Seitenwand 2, die sich aus den hinteren halben Seitenwandteilen 2′ zusammensetzt; eine große Seitenwand 3 und gegenüberliegend eine große Seitenwand 4; den Boden 5, der sich aus zwei halben Bodenteilen 5′ zusammensetzt; und die Oberwand 6 auf. Die Oberwand setzt sich ebenfalls aus zwei hälftigen Oberwandteilen 6′ zusammen.

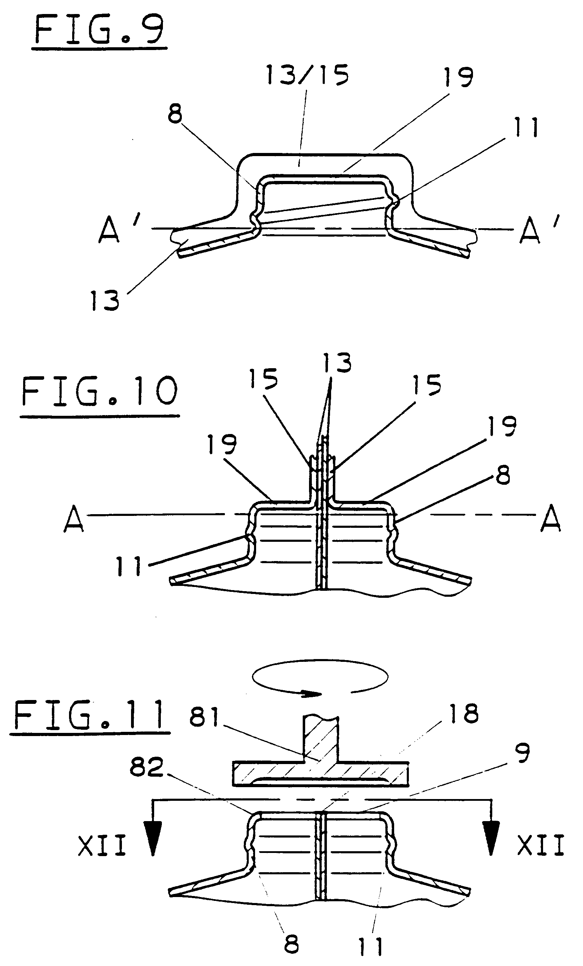

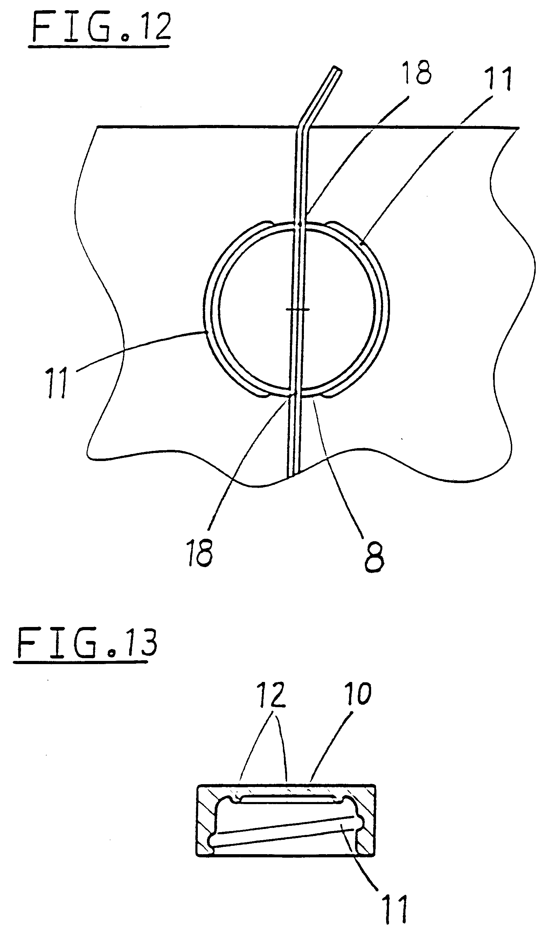

Die Ausgießeinrichtung 7 besteht im wesentlichen aus einem Zylinderrand 8 als Mulde, der zum Inneren der Packung hin frei verbunden ist und nach außen hin gemäß Figur 11 eine Ausgießöffnung 9 hat, die nach dem Befüllen und vollständigen oder teilweisen Entleeren mit der in Figur 13 gezeigten Kappe 10 verschlossen wird, die beispielsweise über ein Gewinde 11 verschließbar ist. Zwar zeigt Figur 13 dieses Gewinde 11 als Innengewinde, aber auch in den Figuren 9 bis 12 ist das aus der Oberfläche des Zylinderrandes 8 herausstehende Außengewinde mit 11 bezeichnet. Die Draufsicht der Figur 12 zeigt übrigens, daß das Gewinde 11 bei einer bevorzugten Ausführungsform auch zweiteilig ausgestaltet sein kann.

Die Kappe 10 hat gemäß Darstellung der Figur 13 oben eine Ringdichtung 12, mit deren Hilfe diese Verschlußkappe 10 in der Lage ist, die Ausgießöffnung 9 flüssigkeitsdicht zu verschließen.

Die gesamte Packung 50 ist aus zwei schalenförmigen Behältern zusammengesetzt, nämlich dem beispielsweise in Figur 5 gezeigten linken Behälter I und dem rechten Behälter II, die etwa gleiches Volumen haben, so daß z.B. eine 2 l Flüssigkeitspackung 50 aus zwei Behältern I und II gebildet werden kann, deren jeder ein Volumen von 1 l Flüssigkeit hat. Jede andere Volumengröße ist denkbar.

Die perspecktivisch hier dargestellte Packung wird von Figur 4 an mit aufsteigender Numerierung erst von demjenigen Zustand an gezeigt, wo die Kunststoffolie 14 auf die Behälter I und II längs der Siegelnaht 51, 51′, 52, 52′, aufgesiegelt ist.

Man erkennt, daß das jeweilige Paar A von in Förderrichtung 53 nebeneinanderliegenden Behältern I und II an den in Förderrichtung 53 außen liegenden Außenkanten 54 mit einem flanschartig nach außen überstehenden Außenrand 13 versehen ist. Dieser Rand 13 erstreckt sich aber auch quer zur Förderrichtung 53, nämlich zwischen jeweils zwei in dieser Förderrichtung 53 aufeinanderfolgenden Paaren A und B von Behältern I, II. Dieser flanschartige Rand 13 besteht also mindestens aus der gleichen Wanddicke bzw. Materialstärke wie die Seitenwandung 3 oder 4.

Auf diesen Rand 13 ist die Kunststoffolie 14 längs einer geschlossenen Schweißnaht 51, 52, 51′, 52′ aufgeschweißt. Hierbei verlaufen die Siegelnähte 51 und 51′ in Förderrichtung 53 parallel neben den Außenkanten 54 jedes Behälterpaares A, B und setzen sich in Richtung quer zur Förderrichtung 53 in die Siegelnähte 52 bzw. 52′ fort. Die Kunststoffolie 14 liegt damit flächig auf dem Rand 13 jedes Behälters I, II so auf, daß die Kunststoffolie 14 im Bereich des Randes 13 des Behälters I, II die Gestalt eines rundum laufenden Steges 15 hat. Diesen Kunststoffsteg 15 erkennt man beim Draufblick auf das linke hintere Teil der noch V-förmig aufklaffenden Packung in der Darstellung der Figur 7, und man erkennt ihn auch bei der Darstellung der Figur 5, während bei den Darstellungen der Figuren 4, 6, 8 und am vorderen rechten Teil der Packungshälfte der Figur 7 der flanschartige Rand 13 des stärkeren Kunststoffmaterials des jeweiligen Behälters I, II zu erkennen ist.

Durch die Siegelnaht 51, 52, 51′, 52′ ist der jeweilige Behälter I bzw. II flüssigkeitsdicht verschlossen, nämlich verschweißt. Die beispielsweise um eine Größenordnung dünnere Kunststoffolie 14 läßt sich sehr gut auf den dickeren flanschartigen Rand 13 des Behälters I bzw. II aufsiegeln. Dadurch entsteht also der beschriebene Verbund des Randes 13 mit dem Steg 15 der Kunststoffolie 14.

Zunächst liegt das Behälterpaar A mit den beiden Behältern I und II in der Darstellung der Figuren 6 und 5 eben, z.B. horizontal nebeneinander, während gemäß Figur 4 das Umklappen um eine gemeinsame innere Kante 23 beginnt, gemäß Darstellung der Figur 7 fortgesetzt wird und im Zustand der Figur 8 beendet ist.

Im Zustand der Figur 8 liegen die Ränder 13 und die Kunststoffstege 15 doppelt gelegt aufeinander. Man erkennt, wie die Seitenwand 2 durch die Wandteile 2′ und die Oberwand 6 durch die Oberwandteile 6′ usw. gebildet werden.

Jeder Behälter I, II weist eine Greifausnehmung 16 in den gegenüberliegenden großen Seitenwänden 3 bzw. 4 auf. Außerdem erkennt man aus den Figuren 7 und 8, daß die Ausgießeinrichtung 7 in einer Oberwandausnehmung 17 vertieft angeordnet ist derart, daß bei der fertigen Packung etwa gemäß Figur 8 die Ausgießeinrichtung 7 nicht über die Außenkontur, d.h. auch nicht über die äußere Oberfläche der Oberwand 6 hinausragt.

Um aus den beiden Behältern, d.h. den Packungshälften, eine integrale Packung etwa der Form der Figur 8 zu schaffen, muß der Zylinderrand 8 verschweißt werden, und man erkennt bei diesem und bei den Figuren 11 und 12 eine Schweißnaht 18, wo die beiden Kunststoffränder durch Schweißen miteinander verbunden sind. Der gesamte Zylinderrand 8, der sich aus den Mulden 8′ (Figur 7) zusammensetzt, stellt sozusagen den oben erwähnten Ausgießstutzen dar, durch welchen das Füllgut nach dem Abschrauben der Verschlußkappe 10 ausgegossen werden kann.

In Figur 7 sieht man im Bereich der Ausgießöffnung hinter der Kunststoffolie 14 einen Teil des Halbringes gestrichelt, und jeder der Mulden 8′ bzw. Halbkreisteile ist mit einer halbkreisförmigen Platte 19 verschlossen. Figur 7 zeigt auch anschaulich die in Förderrichtung 53 liegende Außenkante 54 als gestrichelte Linie (auch in Figur 5), die sich in der Kante 20, 20′ des Behälters I bzw. II des jeweiligen Paares A, B fortsetzt.

Blickt man auf Figur 4, dann sieht man, wie über die innere Kante 23 des Bodens 5 scharnierartig die beiden Behälter I und II umgeklappt werden. Wäre der Zustand der Figur 8 erreicht, dann würden die beiden Bodenteile 5′ den ebenen Boden 5 als Standfläche bilden. Dieser Boden 5 ist nicht ausnahmslos eben, sondern er hat von der mittigen Kante 23 des Bodens 5 nach außen und unten zu seiner jeweiligen Endkante 24 hin kerbartige Vertiefungen oder Ausnehmungen 25.

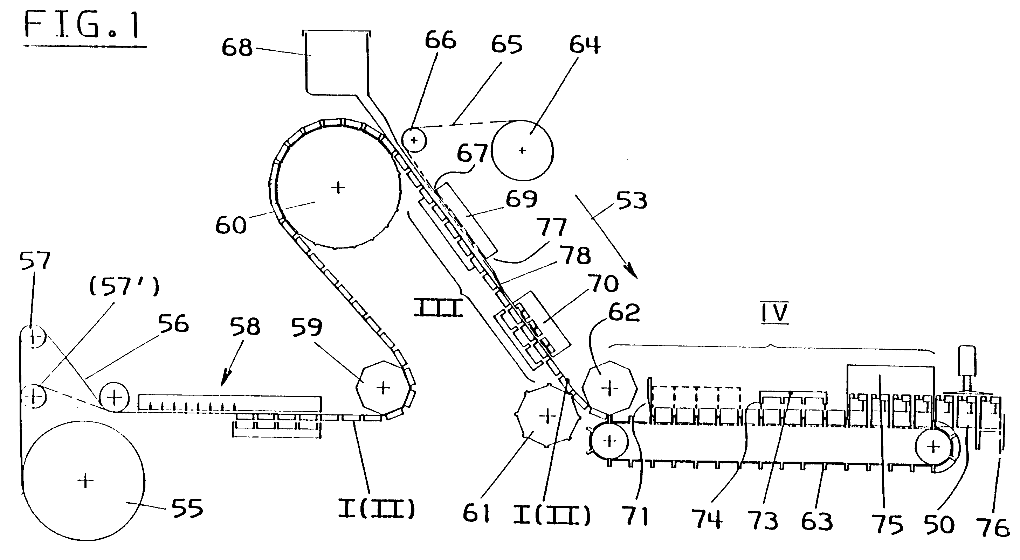

In Figur 1 erkennt man eine erste Rolle 55, von der eine erste Bahn 56 aus mit Kreide, Glimmer, Talkum oder Gips gefülltem Kunststoff mit einer Dicke von etwa 1.0 mm über eine bewegliche Umlenkrolle 57 (57′) abgezogen und in eine nur allgemein mit 58 bezeichnete Tiefzieheinrichtung gefördert wird. Hier wird eine Reihe X, Y von wannenförmigen Behältern I, II heiß verformt. Über eine weitere Umlenkrolle 59 wird die Reihe X, Y von Behälterpaaren A, B schräg nach oben um eine Antriebsrolle 60 herumgezogen, wo dieser Strang von Behältern I, II etwa um 180° umgelenkt wird und in ein erstes Transporttrum III überführt wird. Dieses Transporttrum hat eine vertikale und eine horizontale Komponente derart, daß es in Förderrichtung 53 gegenüber der Vertikalen unter einem Winkel von z.B. 60° schräg geneigt nach unten verläuft. Oben ist der Anfang des ersten Transporttrums III, und am unteren Ende läuft der Strang von Behältern I, II über Antriebs- und/oder Umlenkrollen 61, 62 in ein zweites Transporttrum IV weiter, welches im wesentlichen horizontal angeordnet ist. In ihm erfolgt der Weitertransport über ein endloses Förderband 63.

Von einer zweiten Vorratsrolle 64 wird die Bahn für eine Kunststoffolie 65 angezogen und über eine Umlenkrolle 66 an das oberen Anfangsende des ersten Transporttrums III eingeführt.

Zwischen der bahnförmigen Kunststoffolie 65 und dem Strang von nach oben offenen Behältern I, II im Bereich des schräg geeigten ersten Transporttrums III befindet sich ein ebenfalls parallel verlaufendes und daher schräg geneigt angeordnetes Füllrohr 67 unterhalb eines schematisch angedeuteten Einfüllbehälters 68 für das fließfähige Füllgut.

Im oberen Bereich des ersten Transporttrums III liegt ebenfalls schräg angeordnet die Längssiegeleinrichtung 69 und abstromig im Abstand dahinter die Quersiegeleinrichtung 70.

Im Bereich des zweiten Transporttrums IV ist in Förderrichtung 53 gesehen zunächst eine Vorschneidenstation 71 mit Wendevorrichrung 72, im Abstand dahinter eine Randschweißeinrichtung 73, die vorzugsweise zugleich auch mit einer Vereinzelungsstation 74 kombiniert ist. Am abstromigen Ende dieses zweiten Transporttrums IV befindet sich eine Station 75 zum Aufrichten der fertigen Packungen 50, die über einen Abförderer 76 schließlich zum Umverpacken oder dergleichen weitertransportiert werden.

Mit der Kenntnis des Produktes und der vorstehenden Beschreibung der Herstellungsvorrichtung läßt sich nun kurz und verständlich das Verfahren beschreiben. Von der Vorratsrolle 55 wird die 1,0 mm starke Bahn aus zu 60 % gefülltem Kunststoff abgezogen und in der Tiefzieheinrichtung 58 zu den Behältern I und II geformt. Diese hängen in jeweils einem Paar A, B zusammen, wobei selbstverständlich eine beliebige Zahl von Behälterpaaren A, B, C, D usw. fortlaufend in einem Strang um die Umlenkrolle 59 und über die Antriebsrolle 60 gezogen werden.

Im Bereich des ersten Transporttrums III beginnt der Strang von Behältern I, II zunächst parallel zu dem schräg nach unten verlaufenden Füllrohr 67 zu laufen, während auf der dem Behälterstrang bezüglich des Füllrohres 67 gegenüberliegenden Seite die Kunststoffolie 65 bahnförmig ebenfalls in Transportrichtung 53 bewegt wird. Im Bereich der ebenfalls schräg angeordneten Längssiegeleinrichtung 69 erfolgt die Anbringung der Siegelnaht 51, 51′ jeweils neben der Außenkante 54 der Behälter I, II, so daß der Steg 13 der Kunststoffolie 14 auf den Außenrand 15 außen so strangartig aufgesiegelt wird, daß ein Schlauch entsteht. Dieser ist verständlicherweise vom abstromigen Ende 77 der Längssiegeleinrichtung 69 an in Transportrichtung 53 gesehen vorhanden. Deshalb befindet sich die Auslauföffnung 78 des Füllrohres 67 am Anfang des Schlauches, wobei sich die Flüssigkeitshöhe des Füllgutes etwa in diesem Bereich befinden kann.

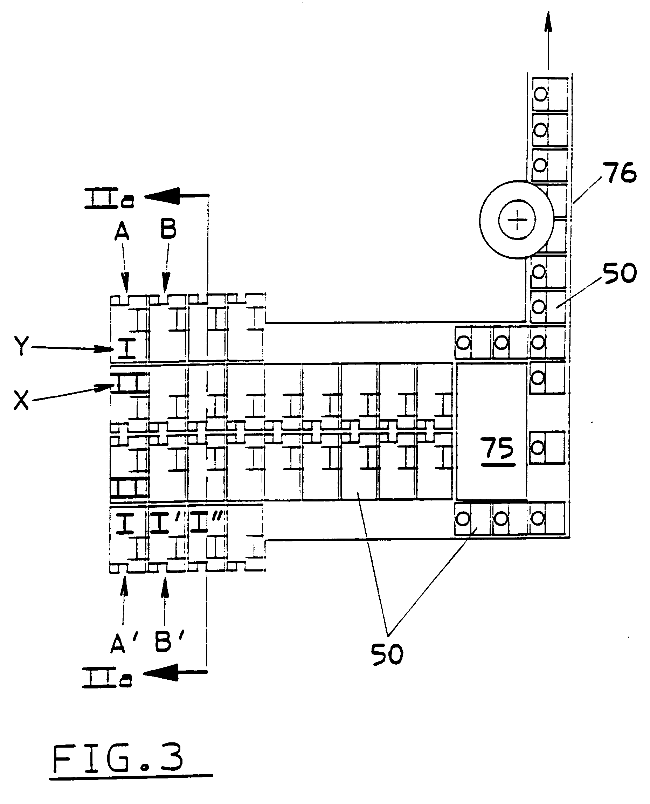

Nach weiterem Durchlaufen der Herstellungsvorrichtung in Transportrichtung 53 gelangt nun dieser gefüllte Schlauch in die Quersiegeleinrichtung 70, wo die Siegelnähte 52, 52′ erstellt werden, welche mit den in Förderrichtung 53 verlaufenden Außensiegelnähten 51, 51′ so dichtend in Verbindung kommen, daß sich die rundum laufende abdichtende Siegelnaht 51, 52, 51′, 52′ bildet. Die somit allseitig verschlossenen Behälter I, II laufen nun aus dem ersten Transporttrum III in das zweite Transporttrum IV ein. Mit der Vorschneideeinrichtung 71 wird z.B. bei der Darstellung der Figur 3 im Bereich der Reihe Y der Vorschnitt von oben nach unten bis zur gemeinsamen mittigen Kante 23 zwischen den beiden Behältern I und II vorgenommen.

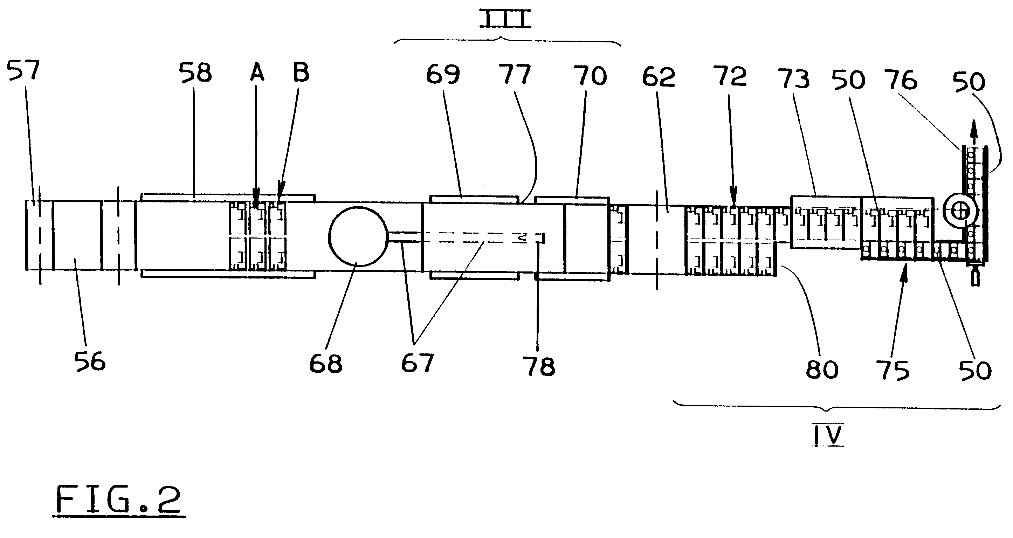

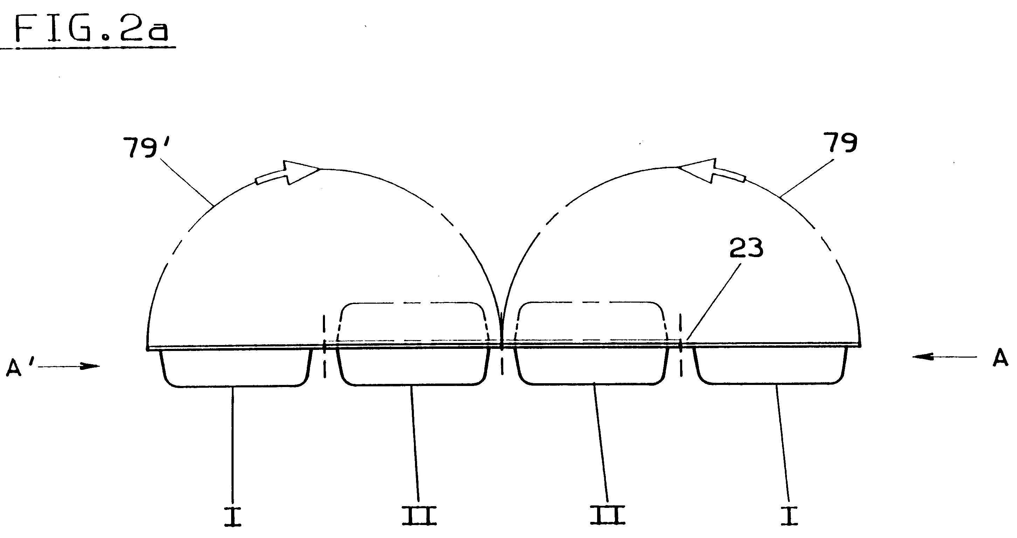

Dadurch können, wie in der Figur 2a schematisch dargestellt ist, die Behälter I scharnierartig um die innere Kante 23 gemäß strichpunktiertem Pfeil 79 umgeklappt werden, so daß sie dann in der in Figur 2a strichpunktierten Position Folie auf Folie auf dem jeweils anderen Behälter des einen Paares A, B usw. liegen. Dieser Zustand ist in Figur 2 durch die Stufe 80 veranschaulicht. Links liegen die Behälterpaare noch aufgeklappt nebeneinander, und rechts von der Stufe 80 sind sie Folie 14 auf Folie 14 übereinanderliegend, zusammengebracht.

Als nächstes erfolgt das Verschweißen der Ränder 15, 13 der beiden Behälter I, II miteinander in der Randschweißeinrichtung 73, und hier wird auch in der Vereinzelungsstation 74 vereinzelt.

Die jetzt fertige Packung gelangt in die Ausgieß-Verschließ-und Wendevorrichtung 75, in welcher nicht nur die Packung aus der liegenden in die stehende Position gebracht wird, sondern in welcher auch ein Vorgang erfolgt, der sich am besten anhand der Figuren 9 bis 11 darstellen läßt.

Gemäß Figur 9 wird nämlich jetzt entland der linie A′-A′ der Rand 13, 15 weggenstanzt, wobei gleichzeitig auch die zwei halbkreisförmigen Plattenteile 19 abgeschnitten werden. Letzteres erkennt man deutlicher aus der Schnittdarstellung der Figur 10. Schließlich wird durch einen schnell rotierenden Stempel 81 ein Umbiegen der zylinderförmigen Mulden 8 längs der Kanten 82 vorgenommen, und gleichzeitig erfolgt die bereits beschriebene Verschweißung der Muldenkanten bzw. Zylinderkanten, wie bei 18 in den Figuren 11 und 12 angedeutet ist.

Nicht dargestellt ist eine weitere Einrichtung zum Aufschrauben vorgefertigter Kappen 10 auf die geöffnete Ausgießeinrichtung 7 zum endgültigen Verschließen der gefüllten Packung 50. Diese gelangt dann auf den Abförderer 76 und wird Umverpackungsstationen oder dergleichen zugeführt.

Figur 3 zeigt ähnlich wie die rechte Seite der Figur 2 das abstromseitige Ende des zweiten Transporttrums IV, im Unterschied zur Figur 2 jedoch für eine Maschine mit doppelter Leistung, bei welcher nicht nur zwei Reihen X und Y von Paaren A, B von Behältern I, II in Förderrichtung hergestellt und transportiert werden, sondern nebeneinanderliegend zwei Paare, wobei neben dem Paar A auch zugleich das Paar A′ hergestellt und verarbeitet wird. In Figur 2a sieht man auch, wie beim Umklappen um die gemeinsame Mittenkante 23 beide Paare A, A′ gemeinsam verarbeitet werden können.

## Patentansprüche

1. Verfahren zur Herstellung einer mit fließfähigem Gut gefüllten Packung (50) aus Kunststoff, bei welchem eine Bahn (56) aus verformbarem Kunststoff von einer Rolle (55) abgezogen und unter Bildung von wenigstens einer Reihe (X, Y) von wannenförmigen Behältern (I, II) verformt wird, der jeweilige Behälter (I, II) danach gefüllt, verschlossen, vereinzelt und abgefördert wird, wobei jeweils wenigstens ein Paar (A, B, A', B') von Behältern (I,II) derart geformt wird, daß an den in Förderrichtung außen liegenden Außenkanten (54) jeweils eines Paares (A, B) der nach oben offenen Behälter (I, II) und zwischen jeweils zwei in Förderrichtung (53) aufeinanderfolgenden Paaren (A und B) von Behältern (I, II) quer zur Förderrichtung (53) jeweils ein flanschartig nach außen überstehender Rand (15) geformt wird, wobei eine einen Teilhohlraum der Ausgießeinrichtung (7) bildende Mulde (8, 8') eingeformt wird, und der flanschartige Rand (15) im wesentlichen in einer Ebene und um die Öffnungen der Behälter (I, II) herumliegend angeordnet ist, wobei von einer zweiten Rolle (64) eine Kunststoffolie (65) abgezogen und auf den Rand (15) längs der jeweiligen Außenkante (54), die mindestens eine Reihe (X, Y) von aneinanderhängenden Paaren (A, B) von Behältern (I, II) nach außen abdichtend, in Förderrichtung (53) längs aufgesiegelt wird (in 69), die Kunststoffolie (65) auf die Ränder (15) zwischen in Förderrichtung (53) aufeinanderfolgenden Paaren (A, B) von Behältern (I, II) durch Querversiegeln (in 70) mit dem Rand (15) verbunden wird und die Bahn geschnitten (in 71; 74) und bearbeitet wird, dadurch gekennzeichnet, daß
- beide Behälter (I, II) in Förderrichtung nebeneinanderliegen
- die Mulde (8, 8') im Bereich der in Förderrichtung (53) außen liegenden Außenkante (54) jedes Behälters (I, II) des jeweiligen Paares (A, B) eingeformt wird,
- der Rand (15) und die Mulde (8) so eingeformt werden, daß der Rand die Mulde außen umzieht,
- die Behälter vor dem Querversiegeln dadurch gefüllt werden, daß der mindestens eine sich hierbei ergebende Schlauch mit dem zu verpackenden Gut gefüllt wird, und
- die Behälter (I, II) jeweils eines Paares (A, B) Folie (14) auf Folie (14) zusammengebracht (72) und zur Bildung einer Packung (50) miteinander verschweißt (in 73, 75) werden.

2. Verfahren nach Anspruch 1, dadurch gekennzeichnet, daß die Mulden (8, 8') beim Zusammenbringen (in 72) der Behälter (I, II) jedes Paares (A, B) aufeinanderzuliegen kommen und sich zum Gesamthohlraum der Ausgießeinrichtung (7) ergänzen und daß sowohl der die Mulde (8, 8') außen umziehende Rand (15) als auch eine Teilfläche (19) der Mulde (8) unter Bildung der Ausgießöffnung (7) entfernt werden.

3. Verfahren nach Anspruch 1 oder 2, dadurch gekennzeichnet, daß die Behälter (I, II) jedes Paares (A, B) durch Umklappen (79, 79') um eine gemeinsame, in Förderrichtung (53) verlaufende innere Kante (23) scharnierartig zusammengebracht und miteinander verbunden werde.

4. Verfahren nach einem der Ansprüche 1 bis 3, dadurch gekennzeichnet, daß nach dem dichtenden Aufsiegeln (51, 52) der Kunststoffolie (14) rundum auf die Ränder (15) des jeweiligen Paares (A, B) von Behältern (I, II) jeweils zwei in Förderrichtung (53) aufeinanderfolgende Behälter (I, I', I'') durch einen von der Außenkante (54) bis zur gemeinsamen inneren Kante (23) verlaufenden Vorschnitt voneinander getrennt werden.

5. Verfahren nach einem der Ansprüche 1 bis 4, dadurch gekennzeichnet, daß bei der Bildung der Packung (50) die Behälter (I, II) längs der aufeinandergelegten Ränder (15) mit dort aufgesiegeltem Kunststoffsteg (13) miteinander verschweißt werden.

6. Verfahren nach Anspruch 1 oder 5, dadurch gekennzeichnet, daß die aufeinandergelegten Ränder (15) beider Behälter (I, II) mit durchgehenden Löchern, Laschen oder Haken zusätzlich formschlüssig miteinander verbunden werden.

7. Verfahren nach einem der Ansprüche 1 bis 6, dadurch gekennzeichnet, daß die Packungen (50) während oder nach dem (des) Verbinden(s) (in 73) der Behälterränder (15) miteinander vereinzelt werden.

8. Verfahren nach einem der Ansprüche 1 bis 7, dadurch gekennzeichnet, daß beim Entfernen des Randes (15) des jeweiligen Behälters (I, II) im Bereich der Mulde (8) sowie deren Teilfläche (19) zur Bildung der Ausgießöffnung (7) die aufeinanderliegenden Kanten (18) der Mulden (8, 8') zur Bildung des Ausgießhohlraumes aneinandergesiegelt (bei 18) werden und daß etwa gleichzeitig die Ränder (15) der Behälter (I, II) zur Bildung der Packung (50) miteinander verschweißt werden.

9. Vorrichtung zur Herstellung einer mit fließfähigem Gut gefüllten Packung aus Kunststoff, mit einer Zuführrolle (55) für eine Bahn (56) aus verformbarem Kunststoff, einer Einrichtung (58) zum Verformen der Bahn (56) in wenigstens eine Reihe von wannenförmigen Behältern (I, II), mit Umlenk-(59) und Antriebsrollen (60) für die wenigstens eine Reihe (X, Y) von wannenförmigen Behältern (I, II), mit Fülleinrichtungen (67), Zuführeinrichtungen (64) für eine weitere Kunststoffolie (65) und Verschließeinrichtungen (69, 70, 75) und mit einem Abförderer (76), dadurch gekennzeichnet, daß zwischen einer Antriebs- (60) und einer Umlenkrolle (61, 62) an einem eine vertikale Komponente aufweisenden ersten Transporttrum (III) für die wenigstens eine Reihe (X, Y) von Behältern (I, II) ein parallel zu diesem Trum (III) verlaufendes Füllrohr (67), eine das Füllrohr (67) umgebende Längssiegeleinrichtung (69) und in Transportrichtung (53) hinter dem Füllrohr (67) eine Quersiegeleinrichtung (70) angebracht sind.

10. Vorrichtung nach Anspruch 9, dadurch gekennzeichnet, daß über einem zweiten Transporttrum (IV) in Transportrichtung (53) hinter der Quersiegeleinrichtung (70) eine Vorschneidestation (71) mit Wendevorrichtung (72), eine Randschweißeinrichtung (73) und eine Vereinzelungsstation (74) angeordnet sind.

11. Vorrichtung nach Anspruch 9 oder 10, dadurch gekennzeichnet, daß zum Verformen der Bahn (56) eine Tiefzieheinrichtung (58) vorgesehen ist.

12. Verwendung von tiefziehfähigem Kunststoff, vorzugsweise einem Thermoplast, besonders Polypropen, als Material für ein Verfahren zur Herstellung einer mit fließfähigem Gut gefüllten Packung (50) aus Kunststoff, bei welchem die Bahn (56) nach einem der Ansprüche 1 bis 8 verarbeitet wird.

13. Verwendung nach Anspruch 12, wobei das Material für die Bahn (56) aus verformbarem Kunststoff ein etwa zu 60% gefüllter Kunststoff ist, wobei als Füllstoff vorzugsweise Kreide, Glimmer, Talkum oder Gips verwendbar sind.

14. Verwendung nach Anspruch 12 oder 13, wobei das Material für den Behälter eine Dicke von 0,7 bis 1,2 mm, vorzugsweise 0,8 bis 1,0 mm, hat und daß die Dicke der Kunststoffolie etwa 5% bis 15%, vorzugsweise etwa 10%, der Dicke des Behälters beträgt.

## Claims

1. A process for producing a pack (50) of plastics material, which is filled with material capable of flow, wherein a web (56) of deformable plastics material is drawn off a roll (55) and deformed to form at least one row (X, Y) of tub-shaped containers (I, II), the respective container (I, II) is thereafter filled, closed, separated and conveyed away, wherein at least one respective pair (A, B, A', B') of containers (I, II) is shaped in such a way that a respective edge portion (15) which projects outwardly in a flange-like configuration is formed transversely to the conveying direction (53) at the outside edges (54), which are outward in the conveying direction, of a respective pair (A, B) of the upwardly open containers (I, II) and between each two pairs (A and B) of containers (I, II) which occur in succession in the conveying direction (53), wherein a trough (8, 8') forming a cavity portion of the pouring device (7) is formed and the flange-like edge portion (15) is arranged substantially in one plane and extending around the openings of the containers (I, II), wherein a plastics foil (65) is drawn off a second roll (64) and sealed (at 69) lengthwise in the conveying direction (53) on to the edge portion (15) along the respective outside edge (54), sealing off relative to the exterior the at least one row (X, Y) of interconnected pairs (A, B) of containers (I, II), the plastics foil (65) is connected to the edge portion (15) by transverse sealing (at 70) on to the edge portions (15) between pairs (A, B) of containers (I, II) which occur in succession in the conveying direction (53) and the web is cut (at 71; 74) and treated, characterised in that:
- both containers (I, II) are disposed side-by-side in the conveying direction,
- the trough (8, 8') is formed in the region of the outside edge (54), which is outward in the conveying direction (53), of each container (I, II) of the respective pair (A, B),
- the edge portion (15) and the trough (8) are so formed that the edge portion extends around the trough on the outside,
- the containers are filled prior to the transverse sealing operation by the at least one tube which is produced in that case being filled with the material to be packaged, and
- the containers (I, II) of a respective pair (A, B) are brought together (72) foil (14)-to-foil (14) and welded together (at 73, 75) to form a pack (50).

2. A process according to claim 1 characterised in that when the containers (I, II) of each pair (A, B) are brought together (at 72) the troughs (8, 8') come to lie one upon the other and supplement each other to form the entire cavity of the pouring device (7) and that both the edge portion (15) which extends around the trough (8, 8') on the outside and also a surface portion (19) of the trough (8) are removed, forming the pouring opening (7).

3. A process according to claim 1 or claim 2 characterised in that the containers (I, II) of each pair (A, B) are brought together hinge-like and joined together by being folded over (79, 79') about a common inner edge (23) which extends in the conveying direction (53).

4. A process according to one of claims 1 to 3 characterised in that after the plastics foil (14) has been sealingly sealed therearound on to the edge portions (15) of the respective pair (A, B) of containers (I, II) each two containers (I, I', I'') which occur in succession in the conveying direction (53) are separated from each other by a preliminary cut which extends from the outside edge (54) to the common inner edge (23).

5. A process according to one of claims 1 to 4 characterised in that when forming the pack (50) the containers (I, II) are welded together along the superposed edge portions (15) with a plastics web portion (13) which is sealed in position there.

6. A process according to claim 1 or claim 5 characterised in that the superposed edge portions (15) of both containers (I, II) are additionally connected together in positively locking relationship by through holes, tabs or hooks.

7. A process according to one of claims 1 to 6 characterised in that the packs (50) are separated during or after the operation of joining (73) the container edge portions (15) to each other.

8. A process according to one of claims 1 to 7 characterised in that upon removal of the edge portion (15) of the respective container (I, II) in the region of the trough (8) and the surface portion (19) thereof for forming the pouring opening (7) the superposed edges (18) of the troughs (8, 8') are sealed to each other (at 18) to form the pouring cavity, and that approximately at the same time the edge portions (15) of the containers (I, II) are welded to each other to form the pack (50).

9. Apparatus for producing a pack of plastics material, which is filled with material capable of flow, comprising a feed roll (55) for a web (56) of deformable plastics material, a device (58) for deforming the web (56) into at least one row of tub-shaped containers (I, II), deflection (59) and drive rolls (60) for the at least one row (X, Y) of tub-shaped containers (I, II), filling devices (67), feed devices (64) for a further plastics foil (65) and closure devices (69, 70, 75) and a discharge conveyor (76), characterised in that disposed between a drive (60) and a deflection roll ((61, 62) on a first transport run (III), having a vertical component, for the at least one row (X, Y) of containers (I, II) are a filling tube (67) which extends parallel to said run (III), a longitudinal sealing device (69) which surrounds the filling tube (67) and downstream of the filling tube (67) in the transport direction a transverse sealing device (70).

10. Apparatus according to claim 9 characterised in that disposed above a second transport run (IV) downstream of the transverse sealing device (70) in the transport direction (53) are a preliminary cutting station (71) with turning device (72), an edge portion welding device (73) and a separating station (74).

11. Apparatus according to claim 9 or claim 10 characterised in that a deep drawing device (58) is provided for shaping the web (56).

12. Use of deep-drawable plastics material, preferably a thermoplastic material, in particular polypropene, as a material for a process for producing a pack (50) of plastics material, which is filled with material capable of flow, wherein the web (56) is processed in accordance with one of claims 1 to 8.

13. Use according to claim 12 wherein the material for the web (56) of deformable plastics material is an approximately 60% filled plastics material, wherein preferably chalk, mica, talcum or gypsum can be used as the filling material.

14. Use according to claim 12 or claim 13 wherein the material for the container is of a thickness of from 0.7 to 12 mm, preferably from 0.8 to 1.0 mm, and the thickness of the plastics foil is about 5% to 15%, preferably about 10%, of the thickness of the container.

## Revendications

1. Procédé pour fabriquer un emballage (50) en matière plastique, rempli d'un produit fluide, selon lequel on tire une bande (56) de matière plastique déformable d'un rouleau (55) et on la déforme en constituant au moins une série (X,Y) de récipients en forme de bacs (I,II), on remplit ensuite chaque récipient (I,II), on le ferme, on le sépare et on l'évacue, et selon lequel au moins un couple (A,B,A',B') de récipients (I,II) est chaque fois façonné d'une manière telle que sur les bords extérieurs (54), qui sont situés sur le côté extérieur dans la direction d'entraînement, d'un couple respectif (A,B) des récipients (I,II) ouverts vers le haut et entre respectivement deux couples (A et B), qui se succèdent dans la direction d'entraînement (53), de récipients (I,II), transversalement à la direction d'entraînement (53), soit respectivement formé un rebord (15) qui fait saillie vers l'extérieur sous forme d'une bride extérieure, et selon lequel on forme un renfoncement (8,8') constituant une cavité partielle du dispositif verseur (7), et le rebord en forme de bride (15) est disposé essentiellement dans un plan et autour des ouvertures des récipients (I,II), et selon lequel on tire une feuille de matière plastique (65) d'un second rouleau (64) et on la scelle (en 69), longitudinalement dans la direction d'entraînement (53), sur le rebord (15) le long du bord extérieur respectif (54), en établissant une étanchéité, vis-à-vis de l'extérieur, d'au moins une série (X,Y) de couples (A,B), accrochés l'un à l'autre, de récipients (I,II), on relie la feuille de matière plastique (65) au rebord (15), par scellage transversal (en 70) sur les rebords situés entre des couples (A,B) de récipients (I,II), qui se succèdent dans la direction d'entraînement (53), et on sectionne (en 71; 74) la bande et on la traite, caractérisé en ce que
- les deux récipients (I,II) sont disposés côte-à-côte dans la direction d'entraînement,
- on forme le renforcement (8,8') dans la région du bord extérieur (54), situé sur le côté extérieur dans la direction d'entraînement (53), de chaque récipient (I,II) du couple respectif (A,B),
- on forme le rebord (15) et le renfoncement (8) de telle sorte que le rebord entoure extérieurement le renfoncement,
- on remplit les récipients, avant le scellage transversal, en remplissant le ou les boyaux ainsi obtenus, avec le produit devant être emballé, et
- on réunit (en 72) les récipients (I,II) de chaque couple (A,B), feuille (14) contre feuille (14), et on les soude l'un à l'autre (en 73,75) pour former un emballage (50).

2. Procédé selon la revendication 1, caractérisé en ce que, lors de la réunion (en 72) des récipients (I,II) de chaque couple (A,B), les renfoncements (8,8') viennent s'appliquer l'un sur l'autre et se complètent pour former la cavité entière du dispositif verseur (7), et en ce qu'on élimine aussi bien le rebord (15), entourant extérieurement le renfoncement (8,8') qu'une surface partielle (19) du renfoncement (8) en formant l'ouverture de déversement (7).

3. Procédé selon la revendication 1 ou 2, caractérisé en ce qu'on réunit et on relie l'un à l'autre, à la manière d'une charnière, les récipients (I,II) de chaque couple (A,B) par rabattement (79,79') autour d'un bord intérieur commun (23) qui s'étend dans la direction d'entraînement (53).

4. Procédé selon l'une des revendications 1 à 3, caractérisé en ce qu'après le scellage hermétique (51,52) de la feuille de matière plastique (14) sur les rebords (15) de chaque couple (A,B) de récipients (I,II) et tout autour de ceux-ci, on sépare chaque fois l'un de l'autre deux récipients (I,I',I''), qui se succèdent dans la direction d'entraînement (53), par une prédécoupe s'étendant depuis le bord extérieur (54) jusqu'au bord intérieur commun (23).

5. Procédé selon l'une des revendications 1 à 4, caractérisé en ce que, lors de la formation de l'emballage (50), on soude entre eux les récipients (I,II) le long des rebords (15) appliqués l'un sur l'autre, avec une barrette de matière plastique (13) scellée sur ces rebords.

6. Procédé selon la revendication 1 ou 5, caractérisé en ce qu'on relie entre eux, selon une liaison additionnelle par formes complémentaires, les rebords (15), appliqués l'un sur l'autre, des deux récipients (I,II), à l'aide de trous traversants, de pattes ou de crochets.

7. Procédé selon l'une des revendications 1 à 6, caractérisé en ce qu'on sépare l'un de l'autre les emballages (50) pendant ou après l'opération de liaison (en 73) des rebords (15) des récipients.

8. Procédé selon l'une des revendications 1 à 7, caractérisé en ce que, lors de l'enlèvement du rebord (15) du récipient respectif (I,II) dans la région du renfoncement (8), ainsi que de la surface partielle (19) de ce dernier, pour la formation de l'ouverture de déversement (7), on scelle l'un à l'autre (en 18) les bords (18) des renfoncements (8,8'), appliqués l'un sur l'autre pour former la cavité de déversement, et en ce que, à peu près simultanément, on soude l'un à l'autre les rebords (15) des récipients (I,II) pour former l'emballage (50).

9. Installation pour fabriquer un emballage en matière plastique, rempli d'un produit fluide, comportant un rouleau d'amenée (55) pour une bande (56) de matière plastique déformable, un dispositif (58) pour déformer la bande (56) en au moins une série de récipients en forme de bacs (I,II), des rouleaux de renvoi (59) et d'entraînement (60) pour la ou les séries (X,Y) de récipients en forme de bacs (I,II), des dispositifs de remplissage (67), des dispositifs d'amenée (64) pour une autre feuille de matière plastique (65) et des dispositifs de fermeture (69,70,75), et un convoyeur d'évacuation (76), caractérisée en ce qu'entre un rouleau d'entraînement (60) et un rouleau de renvoi (61,62), sont montés, sur un premier brin de transport (III), possédant une partie verticale, pour la ou les séries (X,Y) de récipients (I,II), un tube de remplissage (67) qui s'étend parallèlement à ce brin (III), un dispositif de scellage longitudinal (69) qui entoure le tube de remplissage (67) et, en aval du tube de remplissage (67) dans la direction d'entraînement (53), un dispositif de scellage transversal (70).

10. Installation selon la revendication 9, caractérisée en ce qu'un poste de prédécoupage (71) comportant un dispositif de retournement (72), un dispositif de soudage de rebords (73) et un poste de séparation (74) sont disposés au-dessus d'un second brin de transport (IV), en aval du dispositif de scellage transversal (70) dans la direction d'entraînement (53).

11. Installation selon la revendication 9 ou 10, caractérisée en ce que pour déformer la bande (56), il est prévu un dispositif d'emboutissage (58).

12. Utilisation d'une matière plastique apte à être emboutie, de préférence un thermoplaste, notamment du polypropène, en tant que matériau pour un procédé pour fabriquer un emballage (50) en matière plastique, rempli d'un produit fluide, dans laquelle on traite la bande (56) selon l'une des revendications 1 à 8.

13. Utilisation selon la revendication 12, dans laquelle le matériau pour la bande (56) en matière plastique déformable est une matière plastique contenant une charge pour environ 60%, de la craie, du mica, du talc ou du gypse pouvant être utilisé, de préférence, comme charge.

14. Utilisation selon la revendication 12 ou 13, dans laquelle le matériau pour le récipient possède une épaisseur de 0,7 à 1,2 mm, de préférence de 0,8 à 1,0 mm, et en ce que l'épaisseur de la feuille de matière plastique représente 5% à 15% environ, de préférence 10% environ, de l'épaisseur du récipient.
